(19) Europäisches Patentamt / European Patent Office / Office européen des brevets

(11) **EP 4 047 687 B1**

(12) **EUROPEAN PATENT SPECIFICATION**

(45) Date of publication and mention
of the grant of the patent:
**10.04.2024 Bulletin 2024/15**

(21) Application number: **22152473.9**

(22) Date of filing: **20.01.2022**

(51) International Patent Classification (IPC):
$H01M\ 4/38$ (2006.01)    $H01M\ 4/62$ (2006.01)
$H01M\ 10/0525$ (2010.01)    $H01M\ 10/0562$ (2010.01)
$H01M\ 10/44$ (2006.01)    $H01M\ 4/04$ (2006.01)
$H01M\ 4/02$ (2006.01)

(52) Cooperative Patent Classification (CPC):
**H01M 4/625; H01M 4/0447; H01M 4/38;
H01M 10/0525; H01M 10/0562; H01M 10/446;**
H01M 2004/027

(54) **MATERIAL FOR NEGATIVE ELECTRODE ACTIVE MATERIAL LAYER, ALL-SOLID-STATE RECHARGEABLE BATTERY INCLUDING THE SAME, AND CHARGING METHOD OF THE BATTERY**

MATERIAL FÜR DIE AKTIVE SCHICHT EINER NEGATIVEN ELEKTRODE, WIEDERAUFLADBARE FESTSTOFFBATTERIE DAMIT UND LADEVERFAHREN DER BATTERIE

MATÉRIAU POUR COUCHE DE MATÉRIAU ACTIF D'ÉLECTRODE NÉGATIVE, BATTERIE RECHARGEABLE À L'ÉTAT SOLIDE LE COMPRENANT ET PROCÉDÉ DE CHARGE DE BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.02.2021 JP 2021023732
28.06.2021 KR 20210084112**

(43) Date of publication of application:
**24.08.2022 Bulletin 2022/34**

(73) Proprietor: **Samsung SDI Co., Ltd.
Yongin-si, Gyeonggi-do 17084 (KR)**

(72) Inventors:
• **Suzuki, Naoki**
  **Yokohama-shi, Kanagawa-ken (JP)**
• **Fujiki, Satoshi**
  **Yokohama-shi, Kanagawa-ken (JP)**

(74) Representative: **Gulde & Partner
Patent- und Rechtsanwaltskanzlei mbB
Wallstraße 58/59
10179 Berlin (DE)**

(56) References cited:
**JP-A- H10 334 889    JP-A- 2008 198 611
US-A1- 2020 313 164**

**Description**

**BACKGROUND**

1. Field

A material for a negative electrode active material layer, an all-solid-state rechargeable battery including the same, and a charging method of the battery are disclosed.

2. Description of the Related Art

An all-solid-state rechargeable battery using lithium as a negative electrode active material may use lithium deposited in a negative electrode layer by charging as the active material. In such an all-solid-state rechargeable battery, the lithium deposited at a negative electrode penetrates a solid electrolyte layer and grows in a branched shape, deteriorating battery capacity as well as causing a short circuit. Accordingly, JP Patent No. 2019-096610 (Patent Document 1) describes an all-solid-state rechargeable battery suppressing generation and growth of lithium dendrites in the solid electrolyte layer. When the all-solid-state rechargeable battery of Patent Document 1 uses an element forming an alloy or a compound with lithium as a negative electrode active material, the lithium may be intercalated in the negative electrode active material layer at the initial charge but after exceeding charge capacity of the negative electrode active material layer, deposited on inside the negative electrode active material layer or the rear surface thereof (at a current collector). As a result, since the generation or growth of lithium dendrites in the solid electrolyte layer is suppressed, the short circuit and the battery capacity deterioration may be suppressed.

JP H10 334889 A discloses a lithium ion battery comprising an anode layer including amorphous carbon, graphite, silver particles and copper particles.

JP 2008 198611 A discloses a lithium ion battery comprising an anode layer including amorphous carbon, a Sn-Co intermetallics forming an alloy with Li.

US 2020/313164 A1 discloses a solid state battery comprising an anode active layer, which includes silver particles and amorphous carbon.

**SUMMARY**

The invention is defined by the appended claims. The description that follows is subjected to this limitation. Any disclosure lying outside the scope of said claims is only intended for illustrative as well as comparative purposes.

In the process of advancing research on the all-solid-state rechargeable battery according to Patent Document 1 described above, it is found that a noble metal element such as silver is particularly effective as an element for forming an alloy or compound with lithium included in the negative electrode active material layer. However, when a noble metal element is used for the negative electrode active material layer, the production cost of the all-solid-state rechargeable battery becomes large. Therefore, the present disclosure provides an all-solid-state rechargeable battery that suppresses an amount of a noble metal element used when producing the negative electrode of an all-solid rechargeable battery using lithium deposited on the negative electrode layer as an active material by charging as much as possible, and thus reduces the cost as much as possible while reducing the cost of the solid electrolyte layer while suppressing the generation or growth of lithium dendrites.

As a result of repeated studies to solve the aforementioned problems, the inventors have discovered that the generation or growth of lithium dendrites in the solid electrolyte layer may be suppressed by further adding at least one second element that does not form an alloy with lithium to the negative electrode active material layer and an all-solid-state rechargeable battery has better performance than when only an element (also referred to as a first element) that forms an alloy or compound with lithium such as silver is added.

In other words, the material for the negative electrode active material layer for an all-solid-state rechargeable battery according to the present disclosure includes amorphous carbon, at least one first element that forms an alloy with lithium by an electrochemical reaction, and at least one second element that does not form an alloy with lithium by an electrochemical reaction.

The second element includes an element belonging to Group 3 to 11 of the fourth period in the element periodic table. The second element may be at least one selected from iron, copper, titanium, and nickel. Meanwhile, whether the element forms an alloy or compound with lithium according to the electrochemical reaction may be determined, for example, by the following experiment. First, using a Li metal foil as a counter electrode and 10 mg of powder mixed with a powder of a target element and a powder of a solid electrolyte in a weight ratio of 1:1 as a working electrode, CC-CV charging is performed from OCV (open voltage) to about 0.01 V. When the target element forms an alloy or compound with lithium, several hundred to several thousand capacity (mAh/g) is observed per weight of the target element. On the other hand, when no alloy or compound is formed, almost no capacity is observed.

According to the material for the negative electrode active material layer for an all-solid-state rechargeable battery configured in this way, the production cost of the all-solid-state rechargeable battery having the negative electrode active material layer formed using the material for the negative electrode active material layer is reduced while reducing the short circuit and improving output characteristics.

As a specific embodiment, the amorphous carbon may be carbon black.

The first element is at least one selected from silver, platinum, palladium and gold.

In order to significantly improve the output characteristics of the battery compared with the prior art, a content of the second element may be greater than or equal to 8 parts by weight and less than or equal to 50 parts by weight when the content of the amorphous carbon in the material for the negative electrode active material layer is 100 parts by weight.

The negative electrode active material layer includes 50 to 90 parts by weight of the amorphous carbon, 5 to 20 parts by weight of the first element, and 5 to 40 parts by weight of the second element.

As a specific embodiment, a weight ratio of the amorphous carbon to the first element may be in the range of 5:1 to 7:1; and/or a weight ratio of the amorphous carbon to the second element may be in the range of 1.5:1 to 15:1; and/or a weight ratio of the first element to the second element may be in the range of 1:4 to 3:1.

As a specific embodiment, an average particle size (D50) of the second element may be in the range of 20 nm to 1000 nm, preferably 50 nm to 100 nm, measured by laser diffraction.

As a specific embodiment, an all-solid-state rechargeable battery includes a negative electrode active material layer formed using the aforementioned material for the negative electrode active material, and an initial charge capacity of the positive electrode active material layer and an initial charge capacity of the negative active material layer satisfies Formula (1).

$$[\text{Formula (1)}]$$

$$0.01 < b/a < 0.5$$

In Formula (1), a denotes the charge capacity (mAh) of the positive electrode active material layer 12, and b denotes the charge capacity (mAh) of the negative electrode active material layer 22.

While reducing the production cost of the all-solid-state rechargeable battery, short circuit may be suppressed and capacity characteristics and output characteristics may be improved.

**BRIEF DESCRIPTION OF THE DRAWINGS**

FIG. 1 is a cross-sectional view showing a schematic configuration of an all-solid-state rechargeable battery according to an embodiment.

FIG. 2 is a cross-sectional view showing a schematic configuration of an all-solid-state rechargeable battery according to another embodiment.

FIG. 3 is a cross-sectional view showing a schematic configuration in which a lithium metal layer is deposited in the all-solid-state rechargeable battery according to the present embodiment.

FIG. 4 is a cross-sectional view showing a schematic configuration in which a lithium metal layer is deposited in the all-solid-state rechargeable battery according to the present embodiment.

FIG. 5 is a cross-sectional view showing a schematic configuration of an all-solid-state rechargeable battery according to another embodiment.

**DETAILED DESCRIPTION**

Hereinafter, embodiments of the present invention are described in detail with reference to the accompanying drawings. On the other hand, in the present specification and drawings, the same reference numerals are assigned to components having substantially the same functional configuration, and redundant descriptions are omitted.

<1. Basic Configuration of All-solid-state Rechargeable Battery According to the Present Embodiment>

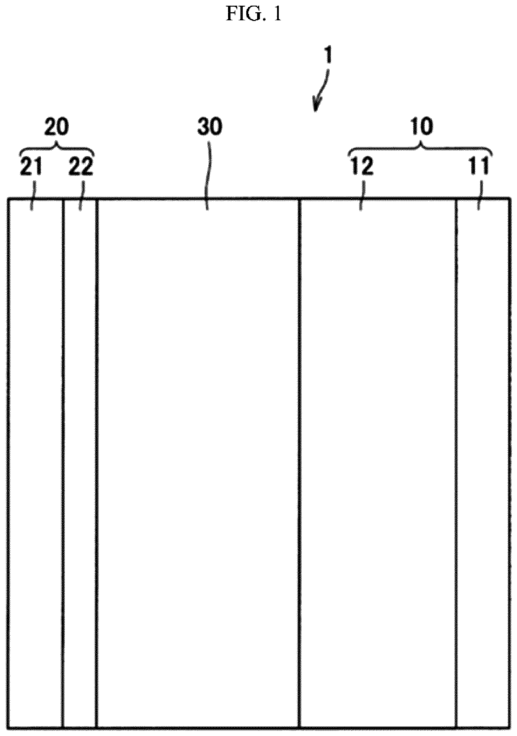

As shown in FIG. 1, the all-solid-state rechargeable battery 1 according to the present embodiment includes a positive electrode layer 10, a negative electrode layer 20, and a solid electrolyte layer 30.

(1-1. Positive Electrode Layer)

The positive electrode layer 10 includes a positive electrode current collector 11 and a positive electrode active material layer 12. Examples of the positive electrode current collector 11 may include a plate or thin body made of indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The positive electrode current collector 11 may be omitted.

The positive electrode active material layer 12 includes a positive electrode active material and a solid electrolyte. On the other hand, the solid electrolyte contained in the positive electrode active material layer 12 may or may not be of the same type as the solid electrolyte contained in the solid electrolyte layer 30. The details of the solid electrolyte will be described in detail in the section of the solid electrolyte layer 30.

The positive electrode active material may be any positive electrode active material capable of reversibly intercalating and deintercalating lithium ions. For example, the positive electrode active material may include a lithium salt such as lithium cobalt oxide (hereinafter, referred to as "LCO"), lithium nickel oxide, lithium nickel cobalt oxide, and lithium nickel cobalt aluminate (hereinafter referred to as "NCA"), lithium nickel cobalt manganate (hereinafter referred to as "NCM"), lithium manganate, lithium iron phosphate; nickel sulfide, copper sulfide, lithium sulfide, sulfur, iron oxide; vanadium oxide or the like. These positive electrode active materials may be used alone, respectively, and may be used in combination of two or more.

In addition, the positive electrode active material may be formed by including a lithium salt of a transition metal oxide having a layered rock salt structure among the aforementioned lithium salts. Herein, the "layered rock salt structure" is a structure in which oxygen atomic layers and metal atomic layers are alternately arranged in the <111> direction of the cubic rock salt structure, and as a result, each atomic layer forms a two-dimensional plane. In addition, "cubic rock salt structure" refers to a sodium chloride type structure, which is one type of crystal structure, and specifically, a structure in which the face-centered cubic lattice formed by each of the cations and anions is arranged with a shift of only 1/2 of the corners of the unit lattice from each other.

Examples of the lithium salt of the transition metal oxide having such a layered rock salt structure may include lithium salts of ternary transition metal oxides such as $LiNi_xCo_yAl_zO_2$ (NCA) or $LiNi_xCo_yMn_zO_2$ (NCM) ($0<x<1$, $0<y<1$, $0<z<1$, and $x+y+z=1$). When the positive electrode active material includes a lithium salt of a ternary transition metal oxide having the aforementioned layered rock salt structure, the energy density and thermal stability of the all-solid-state rechargeable battery 1 may be improved.

The positive electrode active material may be covered with a coating layer. Herein, the coating layer of this embodiment may be any as long as it is a well-known coating layer of the positive electrode active material of an all-solid-state rechargeable battery. Examples of the coating layer may include $Li_2O-ZrO_2$, and the like.

In addition, when the positive electrode active material is formed from a lithium salt of a ternary transition metal oxide such as NCA or NCM, and nickel (Ni) is included as the positive electrode active material, the coating layer may increase capacity density of the all-solid-state rechargeable battery 1, and may reduce metal elution from the positive electrode active material in a charged state. Accordingly, the all-solid-state rechargeable battery 1 according to the present embodiment may improve long-term reliability and cycle characteristics in a charged state.

Herein, the positive electrode active material may have a shape of a particle, such as a regular spherical shape and an ellipsoidal shape. In addition, the particle diameter of the positive electrode active material is not particularly limited, and may be within a range applicable to the positive electrode active material of a conventional all-solid-state rechargeable battery. On the other hand, a content of the positive electrode active material in the positive electrode layer 10 is also not particularly limited, as long as it is within a range applicable to the positive electrode layer 10 of a conventional all-solid rechargeable battery.

In addition, in the positive electrode layer 10, in addition to the aforementioned positive electrode active material and solid electrolyte, for example, additives such as a conductive auxiliary agent, a binder material, a filler, a dispersant, or an ion conductive auxiliary agent may be suitably blended.

Examples of the conductive auxiliary agent that may be blended in the positive electrode layer 10 may include graphite, carbon black, acetylene black, ketjen black, a carbon fiber, and a metal powder. In addition, the binder that may be blended in the positive electrode layer 10 may include, for example, a styrene butadiene rubber (SBR), polytetrafluoroethylene, polyvinylidene fluoride, polyethylene, and the like. In addition, as the filler, the dispersant, the ion conductive auxiliary agent, etc. which may be blended in the positive electrode layer 10, well-known materials which can generally be used for the electrode of an all-solid-state rechargeable battery may be used.

(1-2. Negative Electrode Layer)

The negative electrode layer 20 includes a negative electrode current collector 21 and a negative electrode active material layer 22. The negative electrode current collector 21 may be desirably made of a material that does not react with lithium, that is, neither an alloy nor a compound is formed. Examples of the material constituting the negative electrode current collector 21 may include copper (Cu), stainless steel, titanium (Ti), iron (Fe), cobalt (Co), and nickel (Ni). The negative electrode current collector 21 may be composed of any one of these metals, or may be composed of an alloy of two or more metals or a clad material. The negative electrode current collector 21 may be, for example, a plate or thin type.

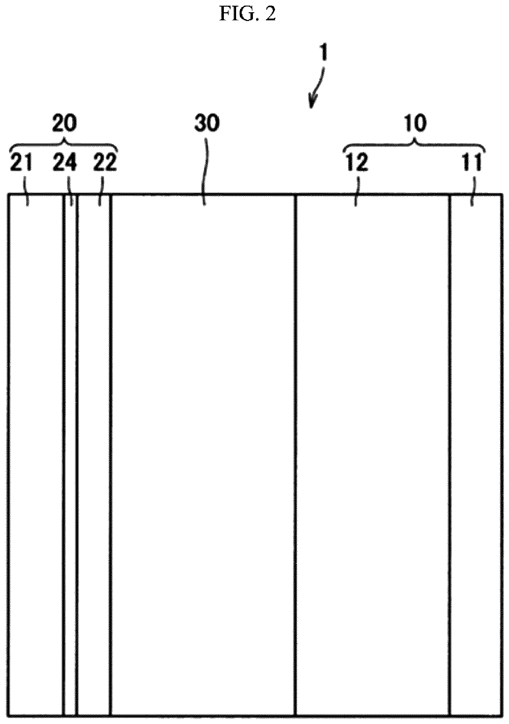

Herein, as shown in FIG. 2, a thin film 24 may be formed on the surface of the negative electrode current collector 21. The thin film 24 includes an element capable of forming an alloy with lithium. The element is at least one of gold, silver, platinum, and palladium. The thin film 24 may include one type of these metals, and may be comprised by or several types of alloys. Due to the thin film 24, the deposition shape of a metal layer 23 is more planarized, and the characteristics of the all-solid-state rechargeable battery 1 are further improved.

Although the thickness in particular of the thin film 24 is not limited, it may be greater than or equal to about 1 nm and less than or equal to about 500 nm. When the thickness of the thin film 24 is less than 1 nm, the function of the thin film 24 cannot be sufficiently exhibited. When the thickness of the thin film 24 exceeds about 500 nm, a lithium deposition amount on the negative electrode may decrease due to the lithium intercalation of the thin film 24 itself, and the characteristics of the all-solid-state rechargeable battery 1 may rather be deteriorated. The thin film 24 is formed on the negative electrode current collector 21 by, for example, a vacuum deposition method, a sputtering method, or a plating method.

The negative electrode active material layer 22 includes a negative electrode active material that forms an alloy or compound with lithium. A comparison between the charge capacity of the positive electrode active material layer 12 and the charge capacity of the negative electrode active material layer 22, that is, a capacity ratio, satisfies the requirements of Formula (1).

$$[\text{Formula (1)}]$$

$$0.01 < b/a < 0.5$$

a: charge capacity (mAh) of the positive active material layer 12
b: charge capacity (mAh) of the negative electrode active material layer 22

Herein, the charge capacity of the positive active material layer 12 is obtained by multiplying a charge capacity density (mAh/g) of the positive active material by a mass of the positive active material in the positive active material layer 12. When a plurality of the positive active materials is used, density x mass of each positive active material is calculated, and a sum thereof may be used as the charge capacity of the positive active material layer 12. The charge capacity of the negative electrode active material layer 22 may be obtained in the same method.

In other words, the charge capacity of the negative electrode active material layer 22 is obtained by multiplying a charge capacity density (mAh/g) of the negative electrode active material by a mass of the negative electrode active material in the negative electrode active material layer 22. When a plurality of the negative electrode active materials is used, charge capacity density×mass of each negative electrode active material is calculated, and a sum thereof may be used as the capacity of the negative electrode active material layer 22. Herein, the charge capacity densities of the positive and negative electrode active materials are estimated using an all-solid half-cell using a lithium metal for the counter electrode. Actually, the charge capacities of the positive active material layer 12 and the negative electrode active material layer 22 are directly measured by using the all-solid half-cell.

A specific method of directly measuring the charge capacities may be the following method. First of all, the charge capacity of the positive active material layer 12 is measured by manufacturing a test cell using the positive active material layer 12 as a working electrode and Li as the counter electrode and then, performing a CC-CV charge from OCV (open voltage) to an upper limit charge voltage. The upper limit charge voltage is set according to the standard of JIS C 8712:2015, which indicates 4.25 V for a lithium cobalt acid-based positive electrode and for the other positive electrodes, a voltage required according to A. 3.2.3 (safety requirements when other upper limit charge voltages are applied) of JIS C 8712:2015. The charge capacity of the negative electrode active material layer 22 is measured by producing a test cell using the negative electrode active material layer 22 as a working electrode and Li as the counter electrode and then, performing a CC-CV charge from OCV (open voltage) to 0.01 V.

The aforementioned test cell is, for example, produced in the following method. The positive active material layer 12 or the negative electrode active material layer 22 for the charge capacity measurement is punched out in a disk shape with a diameter of 13 mm. An electrolyte pellet with a diameter of about 13 mm and a thickness of about 1 mm is prepared by molding about 200 g of the same solid electrolyte powder as used in the all-solid-state rechargeable battery at about 40 MPa. The pellet is put in a tube with an inner diameter of about 13 mm, the positive electrode active material layer 12 or the negative electrode active material layer 22 punched out in the disk shape is put from one side, and a lithium foil with a diameter of about 13 mm and a thickness of about 0.03 mm is put from the other side. In addition, after inserting each one stainless steel disk from both sides of the tube, the whole tube is pressurized to integrate the contents at 300 MPa in the axial direction for about 1 minute. The integrated contents are taken from the tube and put in a case so that a pressure of about 22 MPa is always applied thereto, and the case is sealed, completing the test cell. The charge capacity of the positive active material layer 12 is measured by CC-charging the test cell, for example, at current density of about 0.1 mA and CV-charging it to about 0.02 mA.

The charge capacity is divided by the mass of each active material to calculate charge capacity density. Initial charge capacities of the positive electrode active material layer 12 and the negative electrode active material layer 22 are initial charge capacities at the $1^{st}$ cycle charge. These values are used in examples described later.

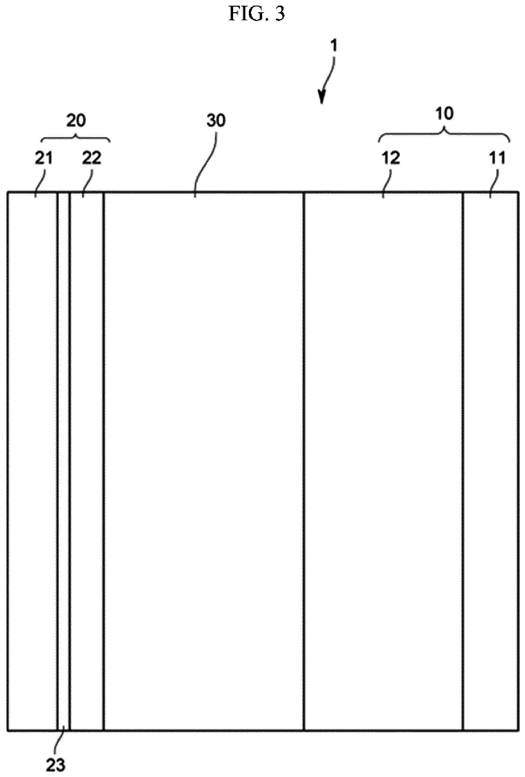

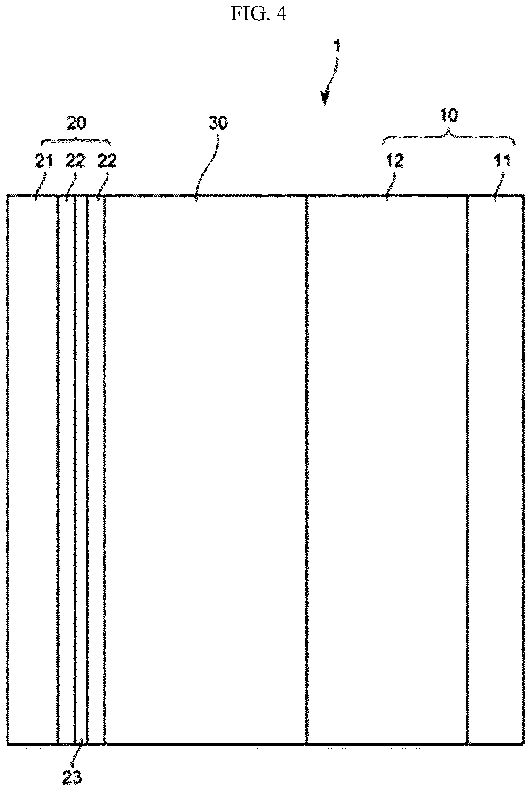

In this way, the charging capacity of the positive electrode active material layer 12 becomes excessive with respect to the charging capacity of the negative electrode active material layer 22. As will be described later, in the present embodiment, the all-solid-state rechargeable battery 1 is charged beyond the charging capacity of the negative electrode active material layer 22. In other words, the negative active material layer 22 is overcharged. In the initial stage of charging, lithium is intercalated in the anode active material layer 22. In other words, the negative electrode active material forms an alloy or compound with lithium ions that have migrated from the positive electrode layer 10. When charging is performed beyond the charging capacity of the negative electrode active material layer 22, for example, as shown in FIG. 3, on the rear surface of the negative electrode active material layer 22, that is, between the negative electrode current collector 21 and the negative electrode active material layer 22, lithium is deposited, and the metal layer 23 is formed by this lithium. In alternative, the metal layer 23 may be formed inside the negative electrode active material layer 22 as shown in FIG. 4. In other words, the metal layer 23 may be formed so as to be sandwiched between the negative electrode active material layer 22 divided into two sheets. The metal layer 23 is mainly composed of lithium (i.e., metal lithium). This phenomenon may be caused by the fact that the negative electrode active material includes a specific material, that is, an element that forms an alloy or compound with lithium.

During discharging, lithium in the negative electrode active material layer 22 and the metal layer 23 is ionized and moves to the positive electrode layer 10. Therefore, in the all-solid-state rechargeable battery 1, lithium may be used as a negative electrode active material. In addition, since the negative electrode active material layer 22 covers the metal layer 23, the negative electrode active material layer 22 functions as a protective layer of the metal layer 23, and may suppress precipitation and growth of dendrites. Thereby, a short circuit and capacity reduction of the all-solid-state rechargeable battery 1 are suppressed, and thus characteristics of the all-solid-state rechargeable battery 1 are improved.

Here, the aforementioned capacity ratio is greater than 0.01. When the capacity ratio is less than or equal to 0.01, characteristics of the all-solid-state rechargeable battery 1 are deteriorated. The reason for this is that the negative electrode active material layer 22 does not sufficiently function as a protective layer. For example, when the thickness of the negative electrode active material layer 22 is very thin, the capacity ratio may be less than or equal to 0.01. In this case, the negative electrode active material layer 22 may collapse due to repeated charging and discharging, and dendrites may be precipitated and grown. As a result, the characteristics of the all-solid-state rechargeable battery 1 may be deteriorated. In Patent Document 1, the interfacial layer or carbon layer is too thin, and it is estimated that the characteristics of the all-solid-state rechargeable battery are not sufficiently improved.

Moreover, the capacity ratio is less than 0.5. When the capacity ratio is greater than or equal to 0.5, the amount of lithium precipitated in the negative electrode may decrease and the battery capacity may decrease. For the same reason, the capacity ratio is desirably less than 0.25. Moreover, when the capacity ratio is less than 0.25, the output characteristic of a battery may also be improved.

The negative electrode active material layer 22 for realizing the above-described function includes a negative electrode active material including amorphous carbon and a first element. The amorphous carbon may include, for example, carbon black, graphene, and the like. Examples of the carbon black may include acetylene black, furnace black, ketjen black, and the like. The first element is an element that forms an alloy or compound with lithium, and is any one or more selected from gold, platinum, palladium, and silver.

When at least one of gold, platinum, palladium and silver is used as the first element, these negative electrode active materials may have, for example, a particle shape, and the particle diameter thereof may be desirably less than or equal to 4 $\mu$m, and more desirably less than or equal to about 300 nm. In this case, the characteristics of the all-solid-state rechargeable battery 1 are also improved. Herein, the particle size of the negative electrode active material is a median diameter (so-called average particle size D50) measured using a laser particle size distribution meter, i.e. by laser diffraction (LD). In the following examples and comparative examples, the particle size is measured by this method. LD may be performed according to ISO 13320. In case of non-spherical particles, the equivalent diameter of a non-spherical particle is equal to a diameter of a spherical particle that exhibits identical properties to that of the investigated non-spherical particle.

In addition, the negative electrode active material layer 22 may include a binder. Thus, the negative electrode active material layer 22 may essentially consist of the amorphous carbon, the first element, the second element, and the binder. Examples of the binder may include a styrene butadiene rubber (SBR), polytetrafluoroethylene, polyvinylidene fluoride, and polyethylene. The binder may include one type or at least two types.

By including the binder in the negative electrode active material layer 22, the negative electrode active material layer 22 may be stabilized on the negative electrode current collector 21. For example, when the binder is not included in the negative electrode active material layer 22, the negative electrode active material layer 22 may be easily separated from the negative electrode current collector 21. Since the negative electrode current collector 21 is exposed where the negative electrode active material layer 22 is separated from the negative electrode current collector 21, a short circuit may occur. In addition, although details will be described later, the negative electrode active material layer 22 is formed by coating slurry in which materials constituting the negative electrode active material layer 22 are dispersed and then, drying it. The binder may be included in the negative electrode active material layer 22 to stably disperse the negative electrode active material in the slurry. As a result, when the slurry is coated, for example, in a screen printing method on the negative electrode current collector 21, a screen may be suppressed from clogging (for example, clogging by agglomerates of the negative electrode active material).

Herein, when the binder is included in negative electrode active material layer 22, a content of the binder may be greater than or equal to 0.3 wt% and less than or equal to 15 wt% based on the total weight of the negative electrode active material. When the content of the binder is less than 0.3 wt%, the strength of the film is not sufficient, the properties are deteriorated, and thus it cannot be handled. When the content of the binder exceeds 20 wt%, the properties of the all-solid-state rechargeable battery 1 may be deteriorated. A desirable upper limit of the content of the binder may be 3 wt%.

A thickness of the negative electrode active material layer 22 is not particularly limited as long as it satisfies the requirements of Formula (1), but may be desirably greater than or equal to 1 $\mu$m and less than or equal to 20 $\mu$m. When the thickness of the negative electrode active material layer 22 is less than 1 $\mu$m, characteristics of the all-solid-state rechargeable battery 1 are not sufficiently improved. When the thickness of the negative electrode active material layer 22 exceeds 20 $\mu$m, a resistance value of the negative electrode active material layer 22 may increase, and as a result, the characteristics of the all-solid-state rechargeable battery 1 may not be sufficiently improved. The thickness of the negative electrode active material layer 22 may be estimated by, for example, assembling an all-solid-state rechargeable battery and observing a cross section after pressure formation with a scanning electron microscope (SEM).

In the negative electrode active material layer 22, an additive used in conventional all-solid rechargeable batteries, for example, a filler, a dispersant, an ion conductive agent, and the like may be appropriately blended.

(1-3. Solid Electrolyte Layer)

The solid electrolyte layer 30 is formed between the positive electrode layer 10 and the negative electrode layer 20 and includes a solid electrolyte.

The solid electrolyte may be composed of, for example, a sulfide-based solid electrolyte material. The sulfide-based solid electrolyte material may include, for example, $Li_2S-P_2S_5$, $Li_2S-P_2S-LiX$ (wherein, X is a halogen element, for example I, or Cl), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (wherein, m and n are integers and Z is Ge, Zn, or Ga), $Li_2S-GeS_2$, $Li_2S-SiS_2-Li_3PO_4$, $Li_2S-SiS_2-Li_pMO_q$ (wherein, p and q are integers and M is P, Si, Ge, B, Al, Ga, or In). Herein, the sulfide-based solid electrolyte material may be produced by treating a starting raw material (e.g., $Li_2S$, $P_2S_5$, etc.) by a melt quenching method, a mechanical milling method, or the like. Moreover, heat treatment may be further performed. The solid electrolyte may be amorphous or crystalline, or may be in a mixed state thereof.

In addition, the solid electrolyte may be one containing at least sulfur (S), phosphorus (P) and lithium (Li) as constituent elements among the above sulfide solid electrolyte materials, and in particular, desirably, one containing $Li_2S-P_2S_5$. Herein, when using one containing $Li_2S-P_2S_5$ as the sulfide-based solid electrolyte material forming the solid electrolyte, a mixing mole ratio of $Li_2S$ and $P_2S_5$ may be, for example, in the range of $Li_2S:P_2S_5$= about 50:50 to about 90:10.

In addition, the solid electrolyte layer 30 may further include a binder. The binder included in the solid electrolyte layer 30 may include, for example, a styrene butadiene rubber (SBR), polytetrafluoroethylene, polyvinylidene fluoride, polyethylene, etc. The binder in the solid electrolyte layer 30 may be the same as or different from the binder in the positive electrode active material layer 12 and the negative electrode active material layer 22.

Examples of the oxide-based solid electrolyte may include garnet-type composite oxide, perovskite-type oxide, LISICON-type composite oxide, NASICON-type composite oxide, Li-alumina-type composite oxide, LiPON, and oxide glass. Among these oxide-based solid electrolytes, an oxide-based solid electrolyte may be used stably even with respect to lithium metal. For example, it may include $La_{0.51}Li_{0.34}TiO_{2.94}$, $Li_{1.3}Al_{10.3}Ti_{1.7}(PO_4)_3$, $Li_7La_3Zr_2O_{12}$, $50Li_4SiO_4\cdot50Li_3BO_3$, $Li_{2.9}PO_{3.3}N$, $Li_{3.6}Si_{0.6}P_{0.4}0_4$, $Li_{1.07}Al_{0.69}Ti_{1.46}(PO_4)_3$, or $Li_{1.5}Al_{10.5}Ge_{1.5}(PO_4)_3$.

<2. Characteristic Configuration of All-solid-state Rechargeable Battery According to the Present Embodiment>

The negative electrode active material layer 22 further includes a second element that does not form an alloy or compound with lithium. The second element is an element belonging to the fourth period, and to Groups 3 to 11 in the element periodic table. That is, the second element is one or more element selected from the group consisting of Sc, Ti, V, Cr, Mn, Fe, Co, Ni, and Cu. More specifically, the second element may be at least one selected from iron, copper, nickel, and titanium. Any one of them may be used or a plurality of types from these may be used in combination. An average particle size (D50) of the second element may be in the range of 20 nm to 1000 nm, preferably 50 nm to 100 nm measured by laser diffraction.

The negative electrode active material layer 22 includes:

50 to 90 parts by weight of the amorphous carbon,
5 to 20 parts by weight of the first element, and
5 to 40 parts by weight of the second element.

A weight ratio of the amorphous carbon to the first element may be in the range of 5:1 to 7:1, especially 6:1. A weight ratio of the amorphous carbon to the second element may be in the range of 1.5:1 to 15:1, preferably 1.5:1 to 3:1, especially 2:1. A weight ratio of the first element to the second element may be in the range of 1:4 to 3:1, preferably 1:4 to 1:2, especially 1:3.

<3. Method of Producing All-solid-state Rechargeable Battery According to the Present Embodiment>

Next, a method of producing the all-solid-state rechargeable battery 1 according to on the present embodiment is described. The all-solid-state rechargeable battery 1 according to the present embodiment may be produced by respectively producing the positive electrode layer 10, the negative electrode layer 20, and the solid electrolyte layer 30, and laminating each layer.

(3-1. Production Process of Positive Electrode Layer)

First, materials (a positive electrode active material, a binder, etc.) constituting the positive electrode active material layer 12 may be added to a non-polar solvent to prepare slurry (the slurry may be a paste and other slurry is also the same.). Then, the obtained slurry is applied on the positive electrode current collector 11 and dried. Then, the positive electrode layer 10 is produced by pressurizing the obtained laminate (for example, performing pressurization using hydrostatic pressure). The pressurization process may be omitted. The positive electrode layer 10 may be produced by pressing/compressing a mixture of materials constituting the positive electrode active material layer 12 in a pellet form, or stretching it in a sheet form. When the positive electrode layer 10 is produced by these methods, the positive electrode current collector 11 may be compressed on the produced pellet or sheet.

(3-2. Production Process of Negative Electrode Layer)

First, the negative electrode active material layer materials (a negative electrode active material, a first element, a second element, a binder, etc.) constituting the negative electrode active material layer 22 are added to a polar solvent or a non-polar solvent to prepare a slurry. Then, the obtained slurry is applied on the negative electrode current collector 21 and dried. Then, the negative electrode layer 20 is produced by pressurizing the obtained laminate (for example, performing pressurization using hydrostatic pressure). The pressurization process may be omitted.

(3-3. Production Process of Solid Electrolyte Layer)

The solid electrolyte layer 30 may be made of a solid electrolyte formed from a sulfide-based solid electrolyte material. First, the starting materials are treated by a melt quenching method or a mechanical milling method. For example, when using the melt quenching method, a predetermined amount of starting materials (for example, $Li_2S$, $P_2S_5$, etc.) are mixed, the pelletized product is reacted in a vacuum at a predetermined reaction temperature, and then quenched to produce a sulfide-based solid electrolyte material. On the other hand, the reaction temperature of the mixture of $Li_2S$ and $P_2S_5$ may be about 400 °C to about 1000 °C, and desirably about 800 °C to about 900 °C. Moreover, the reaction time may be about 0.1 hour to about 12 hours, and desirably about 1 hour to about 12 hours. In addition, the quenching temperature of the reactants may be usually less than or equal to about 10 °C, and desirably less than or equal to about 0 °C, and the quenching rate may be usually about 1 °C/sec to about 10000 °C/sec, and desirably 1 °C/sec to about 1000 °C/sec.

In addition, when the mechanical milling method is used, a sulfide-based solid electrolyte material may be produced by stirring and reacting starting materials (for example, $Li_2S$, $P_2S_5$, etc.) using a ball mill or the like. On the other hand, the stirring speed and stirring time in the mechanical milling method are not particularly limited. As the stirring speed is faster, the production rate of the sulfide-based solid electrolyte material may be higher, and as the stirring time is longer, the conversion rate of the raw material into the sulfide-based solid electrolyte material may be higher. Thereafter, the mixed raw materials obtained by the melt quenching method or the mechanical milling method may be heat-treated at a predetermined temperature and then pulverized to produce a particulate solid electrolyte. When the solid electrolyte has a glass transition point, it may change from amorphous to crystalline by heat treatment.

Subsequently, the solid electrolyte obtained by the above method is formed into a film using a known film forming method such as an aerosol deposition method, a cold spray method, or a sputtering method, thereby producing a solid electrolyte layer 30. On the other hand, the solid electrolyte layer 30 may be produced by pressing solid electrolyte particles block. Alternatively, the solid electrolyte layer 30 may be produced by mixing a solid electrolyte, a solvent, and a binder, applying, drying, and pressurizing.

(3-4. Assembly Process of All-solid-state Rechargeable Battery)

The all-solid-state rechargeable battery 1 according to the present embodiment may be produced by laminating the positive electrode layer 10, the negative electrode layer 20, and the solid electrolyte layer 30 which are produced by the above method so that the solid electrolyte layer 30 may be disposed between the positive electrode layer 10 and the negative electrode layer 20, and pressurizing the same (for example, performing pressurization using hydrostatic pressure).

When the all-solid-state battery produced by the above method is operated, it may be carried out in a state in which pressure is applied to the all-solid-state battery. The pressure may be greater than or equal to about 0.5 MPa and less than or equal to about 10 MPa.

Moreover, application of pressure may also be performed by a method, for example, placing an all-solid-state battery between two hard plates, such as stainless steel, brass, aluminum, glass, and tightening these two plates with a screw.

<4. Charging Method of All-solid-state Rechargeable Battery >

Next, the charging method of the all-solid-state rechargeable battery 1 is described. In the present embodiment, as described above, the all-solid-state rechargeable battery 1 is charged beyond the charge capacity of the negative electrode active material layer 22. In other words, the negative active material layer 22 is overcharged when charging the all-solid-state rechargeable battery 1 the first time. In the initial stage of charging, lithium is intercalated in the negative electrode active material layer 22. When charging is performed beyond the charge capacity of the negative electrode active material layer 22, for example, as shown in FIG. 3, on the rear surface of the negative electrode active material layer 22, that is, between the negative electrode current collector 21 and the negative electrode active material layer 22, lithium is deposited, and the metal layer 23, which is not present at the time of production, is formed by this lithium.

During discharging, lithium in the negative electrode active material layer 22 and the metal layer 23 is ionized and moves to the positive electrode layer 10. The charging amount may be a value between about 2 times and about 100 times, and more desirably about 4 times or more and about 100 times or less the charge capacity of the negative electrode active material layer 22.

<5. Effect of the Present Embodiment>

According to the all-solid-state rechargeable battery 1 configured as described above, since the negative electrode active material layer 22 contains amorphous carbon and the first element as a negative electrode active material, when charged beyond charge capacity of the negative electrode active material, lithium deposition on the surface of the negative electrode active material layer 22 at the solid electrolyte layer 30 which occurs in a battery capable of using lithium as a negative electrode active material may be suppressed.

In addition, when the negative electrode active material layer 22 is overcharged, for example, as shown as the metal layer 23 in FIG. 3 or 4, lithium may be deposited in layers. As a result, compared with when the lithium is not deposited in layers, the all-solid-state rechargeable battery 1 may be suppressed from an internal pressure increase due to charges and discharges. In addition, compared with when the lithium is not deposited in layers, the all-solid-state rechargeable battery 1 may be suppressed from generation of internal voids due to the charges and discharges.

For the same reasons as described above, the all-solid-state rechargeable battery 1 according to the embodiment may be suppressed from deposition and growth of dendrites. Accordingly, the all-solid-state rechargeable battery is suppressed from a short circuit and capacity deterioration, and furthermore, characteristics of the all-solid-state rechargeable battery are improved.

In the all-solid-state rechargeable battery 1 according to the embodiment, since the negative electrode active material layer 22 further includes the aforementioned second element, as described above, the deposition or growth of dendrites may not only be suppressed, but also an amount of a noble metal as the first element included in the negative electrode active material layer 22 may be reduced. As a result, a producing cost of the all-solid-state rechargeable battery 1 may be reduced as small as possible. On the other hand, in the all-solid-state rechargeable battery 1 according to the embodiment, since the metal layer 23 is not formed in advance before the first charge, the producing cost may be further reduced, compared with the all-solid-state rechargeable battery 1 in which the metal layer 23 is formed in advance according to the second embodiment of the present invention.

<6. Another Embodiment of the Present Disclosure>

<6-1. Configuration of All-solid-state Rechargeable Battery According to the Second Embodiment >

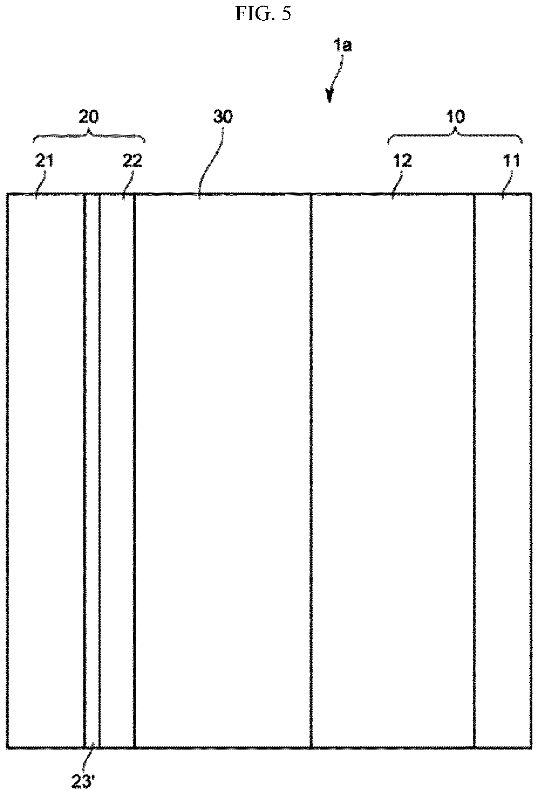

Next, the configuration of the all-solid-state rechargeable battery 1a according to the second embodiment is described with reference to FIG. 5. As shown in FIG. 5, the all-solid-state rechargeable battery 1a includes a positive electrode layer 10, a negative electrode layer 20, and a solid electrolyte layer 30. The configurations of the positive electrode layer 10 and the solid electrolyte layer 30 are the same as those of the first embodiment.

(6-1-1. Configuration of Negative Electrode Layer)

The negative electrode layer 20 includes the negative electrode current collector 21, the negative electrode active material layer 22, and a metal layer 23'. In other words, in the first embodiment, the metal layer 23 that does not exist before the first charging is formed between the negative electrode current collector 21 and the negative electrode active material layer 22 by overcharging the negative electrode active material layer 22. On the other hand, in the second embodiment, as shown in FIG. 5, a metal layer 23' is formed in advance (i.e., before the first charge) between the negative electrode current collector 21 and the negative electrode active material layer 22. As in the first embodiment, a metal layer 23 is further formed by lithium during the initial overcharging, wherein lithium is deposited in or on the metal layer 23'.

The negative electrode current collector 21 and the negative electrode active material layer 22 have the same configuration as those of the first embodiment. The metal layer 23, 23' includes lithium or a lithium alloy. In other words, the metal layer 23, 23' functions as a storage for lithium. The lithium alloy may include, for example, Li-Ag alloy and Li-Au alloy. The metal layer 23, 23' may be composed of any one of these alloys or the lithium or composed of multiple types of the alloys. In the second embodiment, the metal layer 23, 23' functions as the lithium storage and thus may much improve the characteristics of the all-solid-state rechargeable battery 1.

Herein, a thickness of the metal layer 23' is not particularly limited but may be in a range of greater than or equal to 1 $\mu$m and less than or equal to 200 $\mu$m. When the metal layer 23' has a thickness of less than about 1 $\mu$m, the metal layer 23' may not sufficiently work as the storage. When the thickness of the metal layer 23' exceeds about 200 $\mu$m, the mass and the volume of the all-solid-state rechargeable battery 1 are increased, rather deteriorating the characteristics thereof. For this reason, the metal layer 23' may be, for example, a metal foil having the above thickness.

<Method for Producing All-solid-state Rechargeable Battery according to the Second Embodiment >

Next, the producing method of the all-solid-state rechargeable battery 1 according to second embodiment is described. The positive electrode layer 10 and the solid electrolyte layer 30 are produced in the same manner as in the first embodiment.

(6-2-1. Production Process of Negative Electrode Layer)

In the second embodiment, the negative electrode active material layer 22 is disposed on the metal layer 23'. The metal layer 23' is substantially metal foil in many cases. Since it is difficult to form the negative electrode active material layer 22 on the lithium foil or lithium alloy foil, the negative electrode layer 20 may be produced by the following method.

First, the negative electrode active material layer 22 is formed on a specific substrate (e.g., Ni plate) by the same method as in the first embodiment. Specifically, a slurry is prepared by adding the material constituting the negative electrode active material layer 22 to a solvent. Then, the obtained slurry is applied on a substrate, and then dried. Next, the negative electrode active material layer 22 is formed on the substrate by pressurizing the obtained laminate (for example, performing pressurization using hydrostatic pressure). The pressurization process may be omitted.

Next, the solid electrolyte layer 30 is laminated on the negative electrode active material layer 22, and the obtained laminate is pressurized (performing pressurization using hydrostatic pressure). Then, the substrate is removed. Accordingly, a laminate of the negative electrode active material layer 22 and the solid electrolyte layer 30 is produced.

Next, on the negative electrode current collector 21, the metal foil constituting the metal layer 23', the laminate of the negative electrode active material layer 22 and the solid electrolyte layer 30, and the positive electrode layer 10 are sequentially laminated. Next, the all-solid-state rechargeable battery 1a may be produced by pressurizing the obtained laminate (for example, performing pressurization using hydrostatic pressure).

When operating the all-solid-state battery produced by the above method, it may be carried out in a state in which pressure is applied to the all-solid-state battery.

The pressure may be greater than or equal to about 0.5 MPa and less than or equal to about 10 MPa. In addition, the application of pressure may also be performed by placing an all-solid-state battery between two hard plates such as stainless steel, brass, aluminum, glass, etc., and tightening these two plates with screws.

<6-3. Charging Method of All-solid-state Rechargeable Battery according to the Second Embodiment >

A charging method of the all-solid-state rechargeable battery 1a is the same as in the first embodiment. In other words, the all-solid-state rechargeable battery 1a is charged beyond charge capacity of the negative electrode active material layer 22. In other words, the negative electrode active material layer 22 is overcharged. At the initial charges, lithium is intercalated in the negative electrode active material layer 22. When the charging is performed beyond the capacity of the negative electrode active material layer 22, lithium is deposited in the metal layer 23' (or on the metal layer 23') forming the metal layer 23. During the discharging, the lithium in the negative electrode active material layer 22 and the metal layer 23 is ionized and moves toward the positive electrode layer 10.

<7. Effects of the Second Embodiment >

This all-solid-state rechargeable battery 1a, like in the above embodiment, may use lithium as a negative electrode active material. In addition, the negative electrode active material layer 22 may coat the metal layer 23 and thus work as a protective layer of the metal layer 23 and simultaneously, suppress deposition and growth of dendrites. Accordingly, the all-solid-state rechargeable battery 1a may be suppressed from a short circuit and capacity deterioration, and the characteristics of the all-solid-state rechargeable battery 1a may be furthermore improved.

Examples of the material for the negative electrode active material layer, the negative electrode active material layer produced using the material for the negative electrode active material layer, and the all-solid-state rechargeable battery having the negative electrode active material layer are described as follows, but the present invention is not limited to these examples.

(1. Description of Examples and Comparative Examples)

<Example 1>

In this embodiment, a negative electrode active material layer was formed using carbon black as amorphous carbon, silver as an alloy forming element, and iron as a non-alloy forming element, and then, charge and discharge characteristics of an all-solid-state rechargeable battery cell having the negative electrode active material layer was evaluated.

(1-1. Production of Negative Electrode Layer)

12 g of carbon black as amorphous carbon, 2 g of silver particles as the first element, and 6 g of iron particles as the second element were put in a container, and an NMP solution in which 8 wt% of a binder (#9300, Kureha Corp.) was included was added thereto and then, stirred, while NMP was little by little added thereto, preparing a slurry-type negative electrode active material. The carbon black had a nitrogen adsorption specific surface area of 54 $m^2$/g and a DBP oil absorption rate of 182 ml/100 g, the silver particles had an average particle diameter D50 of 60 nm, and the iron particles had an average particle diameter D50 of 70 nm. This slurry type material for a negative electrode active material layer was coated on a 10 micron-thick stainless steel film with a blade coater, dried in the air at 80 °C for 20 minutes, and vacuum-dried at 100 °C for about 12 hours. In this way, on the negative electrode current collector made of a stainless steel foil, a negative electrode active material layer, which was a mixed particle thin film containing silver, iron, and carbon black, was formed, producing a negative electrode layer. This negative electrode layer had initial charge capacity of about 2 mAh.

(1-2 Production of All-solid-state Rechargeable Battery)

This negative electrode layer was used to produce an all-solid-state battery cell in the following method. $Li_6PS_5Cl$,

which is argyrodite type crystals, was used as a solid electrolyte. $LiNi_{0.8}C_{0.15}Mn_{0.05}O_2$(NCM) as a positive active material, the $Li_6PS_5Cl$ solid electrolyte, carbon nanofiber (CNF) as a conductive agent, TEFLON (tetrafluoroethylene) as a binder were mixed in a weight ratio of positive active material:solid electrolyte:CNF:binder = 83:13.5:2:1.5 and then, made into a sheet for a positive active material layer. In addition, the sheet for a positive active material layer was molded into an about 2 cm square as an active material layer and then, pressed on an 18 μm-thick aluminum foil of a positive electrode current collector, producing a positive electrode layer. The positive electrode layer had initial charge capacity (charge capacity at the 1st cycle) of about 18 mAh for 4.25 V charge. Accordingly, negative electrode capacity/positive electrode capacity was about 0.11, satisfying the requirements of Formula (1) described above.

Subsequently, a solid electrolyte sheet was produced in the following method. 1 wt% of a binder was added to the $Li_6PS_5Cl$ solid electrolyte and then, stirred, while xylene and diethylbenzene were added thereto, preparing a slurry-type solid electrolyte material. The obtained slurry-type solid electrolyte material was coated on a non-woven fabric using the blade coater, dried in the air at 40 °C and vacuum-dried at 40 °C for 12 hours, obtaining the solid electrolyte sheet.

The positive electrode layer, the solid electrolyte sheet, and the negative electrode layer were sequentially laminated and sealed in a laminate film under vacuum, producing an all-solid-state battery cell. Each portion of the positive electrode layer and the negative electrode layer came out of the laminate film, while kept in the vacuum state, and used as a terminal through which the positive electrode layer or the negative electrode layer were electrically connected to an external wiring. This obtained all-solid-state rechargeable battery cell was subjected to hydrostatic pressure of 490 MPa. In addition, this all-solid-state battery was placed between two stainless steel plates with a thickness of about 1 cm at both sides of the laminating direction. Each of the two stainless steel plates had four holes in the same location, and the all-solid-state battery cell was supposed to be placed inside the quadrilateral made by the four holes. In this state, one bolt was passed through each of the four holes so as to penetrate the two stainless steel plates from the outside of the two stainless steel plates. Subsequently, while the two stainless steel plates were pressed from the outside, the four bolts were respectively closed and tightened with nuts, applying a pressure of about 4MPa to the all-solid-state battery cell. Then, charge and discharge characteristics of the cell were evaluated under the following conditions.

(1-3. Evaluation of Charge/Discharge Characteristics)

The measurement was performed by putting the all-solid-state battery cell in a 25 °C thermostat. The charging was performed up to a battery voltage of 4.25 V at a constant current of 0.6 mA/cm$^2$ and then, to a current of 0.3 mA at a constant voltage of 4.25 V. The discharging was performed to a battery voltage of 2.5 V at a constant current 0.6 mA/cm$^2$, 2 mA/cm$^2$, and 6 mA/cm$^2$ in each first, second, and third cycles. In the first and third cycles, discharge capacity per active material weight (specific discharge capacity) was 185.7 mAh/g and 127.7 mAh/g, respectively. The results are shown in Table 1.

<Examples 2 and 3>

All-solid-state rechargeable battery cells were produced in the same manner as in Example 1 except that the iron particles, the second element of the negative electrode active material, were respectively used in each weight of 2 g and 1 g, and then, charge and discharge characteristics thereof were evaluated in the same order as in Example 1. The results are shown in Table 1.

<Examples 4 and 5>

All-solid-state rechargeable battery cells were produced in the same manner as in Example 1 except that the iron particles, the second element of the negative electrode active material, were adjusted to have an average particle diameter D50 of 800 nm and respectively used in each weight of 2 g and 6 g, and then, charge and discharge characteristics thereof were evaluated in the same order as in Example 1. The results are shown in Table 1.

<Examples 6 and 7>

All-solid-state rechargeable battery cells were produced in the same manner as in Example 1 except that copper particles with an average particle diameter D50 of 70 nm were used instead of the iron particles, the second element of the negative electrode active material, and respectively used in each weight of 2 g and 6 g, and then, charge and discharge characteristics thereof were evaluated in the same order as in Example 1. The results are shown in Table 1.

<Examples 8 and 9>

All-solid-state rechargeable battery cells were produced in the same manner as in Example 1 except that titanium particles with an average particle diameter D50 of 70 nm were used instead of the iron particles, the second element of the negative electrode active material, and each weight thereof was 2 g and 6 g, and then, charge and discharge characteristics thereof were evaluated in the same order as in Example 1. The results are shown in Table 1.

<Comparative Example 1>

2 g of silver particles with an average particle diameter D50 of 60 nm was used instead of the iron particles, the second element of the negative electrode active material second element. In other words, 12 g of carbon black as amorphous carbon and 4 g of silver particles as the first element were mixed. Except for this, an all-solid-state rechargeable battery cell was produced in the same manner as Example 1, and charge and discharge characteristics thereof were evaluated in the same manner as Example 1. As a result, discharge specific capacity at the first and third cycle was 178.4 mAh/g and 73.1 mAh/g, respectively. The results are shown in Table 1.

<Comparative Example 2>

An all-solid-state rechargeable battery cell was produced in the same manner as Example 1 except that 2 g of zinc particles with an average particle diameter D50 of 80 nm was used instead of the iron particles, the second element of the negative electrode active material, and then, charge and discharge characteristics thereof were evaluated in the same order as Example 1. The results are shown in Table 1.

<Comparative Example 3>

An all-solid-state rechargeable battery cell was produced in the same manner as Example 1 except that 2 g of tin particles with an average particle diameter D50 of 60 nm to 80 nm was used instead of the iron particles, the second element of the negative electrode active material, and then, charge and discharge characteristics thereof were evaluated in the same order as Example 1. The results are shown in Table 1.

<Comparative Example 4>

An all-solid-state rechargeable battery cell was produced in the same manner as Example 1 except that 2 g of aluminum particles with an average particle diameter D50 of 40 nm to 50 nm was used instead of the iron particles, the second element of the negative electrode active material, and then, charge and discharge characteristics thereof were evaluated in the same order as Example 1. The results are shown in Table 1.

<Comparative Example 5>

An all-solid-state rechargeable battery cell was produced in the same manner as Example 1 except that 2 g of bismuth particles with an average particle diameter D50 of 40 nm to 60 nm was used instead of the iron particles, the second element of the negative electrode active material, and then, charge and discharge characteristics thereof were evaluated in the same order as Example 1. The results are shown in Table 1.

<Comparative Example 6>

An all-solid-state rechargeable battery cell was produced in the same manner as Example 1 except that the iron particles, the second element of the negative electrode active material, were excluded, and then, charge and discharge characteristics thereof were evaluated in the same order as Example 1. As a result, discharge specific capacity at the first and third cycle was 179.0 mAh/g and 66.5 mAh/g, respectively. The results are shown in Table 1.

(Table 1)

| | Negative electrode | Particle diameter of second element (nm) | First cycle discharge specific capacity (mAh/g) | Third cycle Discharge specific capacity (mAh/g) | Effect |
|---|---|---|---|---|---|
| Example 1 | CB:Ag:Fe=6/1/3 | 70 | 185.7 | 127.7 | ○ |
| Example 2 | CB:Ag:Fe=6/1/1 | 70 | 185.0 | 97.4 | ○ |
| Example 3 | CB:Ag:Fe=6/1/0.5 | 70 | 177.2 | 81.6 | ○ |
| Example 4 | CB:Ag:Fe=6/1/1 | 800 | 175.9 | 81.9 | ○ |
| Example 5 | CB:Ag:Fe=6/1/3 | 800 | 174.1 | 80.7 | ○ |
| Example 6 | CB:Ag:Cu=6/1/1 | 70 | 182.9 | 85.7 | ○ |
| Example 7 | CB:Ag:Cu=6/1/3 | 70 | 185.9 | 124.9 | ○ |
| Example 8 | CB:Ag:Ti=6/1/1 | 70 | 181.3 | 92.8 | ○ |
| Example 9 | CB:Ag:Ti=6/1/3 | 70 | 179.5 | 82.4 | ○ |
| Comparative Example 1 | CB:Ag = 3/1 | | 178.4 | 73.1 | |
| Comparative Example 2 | CB:Ag:Zn = 6/1/1 | 80 | 178.3 | 68.2 | X |
| Comparative Example 3 | CB:Ag:Sn = 6/1/1 | 60 to 80 | 178.9 | 73.5 | X |
| Comparative Example 4 | CB:Ag:Al = 6/1/1 | 40 to 50 | 175.7 | 68.8 | X |
| Comparative Example 5 | CB:Ag:Bi = 6/1/1 | 40 to 60 | 176.6 | 68.9 | X |
| Comparative Example 6 | CB:Ag = 6/1 | | 179.0 | 66.5 | |

(2. Evaluation of Results)

The results of the examples and the comparative examples are shown in Table 1. Referring to the results, each all-solid-state battery cell showed no significant difference in the discharge capacity of the first cycle but a significant difference in the discharge capacity of the third cycle. The reason is that the output characteristic difference in the third cycle tends to reliably appear due to the large current density during the third cycle discharge. Accordingly, the effects of the additive elements in the negative electrode active material were evaluated according to discharge capacity of the third cycle.

In Table 1, when a portion of the silver element, the first element, was substituted with the second element that does not form an alloy or a compound with lithium, when the discharge capacity was significantly greatly improved compared with Comparative Example 1, "Effective" was given (O in Table), but when equivalent or inferior, "Not Effective" was given (X in Table). "Significantly greatly improved" indicates that the discharge capacity of the third cycle was increased by 10% or more (greater than or equal to 80.4 mAh/g), compared with the silver addition (Comparative Example 1).

Examples 1 to 9 all exhibited 80.4 mAh/g or more of the discharge capacity of the third cycle, which largely exceeded that of Comparative Example 1. In other words, compared with Comparative Example 1 containing amorphous carbon and the first element alone in the negative electrode active material layer material, Examples 1 to 9 containing the second element exhibited excellent charge and discharge characteristics.

On the other hand, the effects of Comparative Examples 2 to 5 did not reach that of the silver particle addition (Comparative Example1). Accordingly, there was a difference in the output characteristic improvement depending on a type or an amount of metal particles added as the second element. Referring to the examples and the comparative examples in Table 1, there was no effect when zinc, tin, aluminum, or bismuth as the second element was added, but there was an effect when iron, copper, or titanium, which was an element belonging to the fourth period in the periodic table and in addition, to Groups 3 to 11. Examples 1 to 9 had a sufficient effect, compared with Comparative Example 6 in which the addition amount of silver, the first element, was simply reduced. Resultantly, Examples 1 to 9 exhibited improved discharge specific capacity in the third cycle by not reducing the content of the first element but adding the second element in the negative electrode active material.

In addition, Examples 1 to 5 exhibited that there was an effect when the weight of iron was between 8.3% and 50% of that of carbon, and in addition, when the particles had a particle diameter of 800 nm, there was a small but still effect.

Referring to the result, compared with when amorphous carbon and the first element were included in the material for a negative electrode active material layer, when a portion of the first element was substituted with the second element, which was inexpensive, charge and discharge characteristics of the all-solid-state rechargeable battery cell in which lithium was deposited in the negative electrode layer were significantly improved, while the producing cost of the all-solid-state rechargeable battery cell was reduced down to small. On the other hand, in Examples 1 to 9, the same effect would be expected, even though a type or shape of the first element, a ratio of amorphous carbon and the first element, and the like were changed.

**Claims**

1. A material for a negative electrode active material layer (22), comprising

   amorphous carbon,
   at least one first element that forms an alloy or compound with lithium by an electrochemical reaction, wherein the first element is at least one selected from silver, platinum, gold, and palladium, and
   at least one second element that does not form an alloy or compound with lithium by an electrochemical reaction, wherein the second element is an element belonging to Group 3 to 11 of the fourth period in the element periodic table,
   wherein the negative electrode active material layer (22) includes:

      50 to 90 parts by weight of the amorphous carbon,
      5 to 20 parts by weight of the first element, and
      5 to 40 parts by weight of the second element.

2. The material of claim 1, wherein the second element is at least one selected from iron, copper, titanium, and nickel.

3. The material of claim 1 or 2, wherein the amorphous carbon is carbon black.

4. The material of claim 1, wherein the first element is silver.

5. The material of any one of the preceding claims, wherein in the negative electrode active material layer (22), when a content of the amorphous carbon is 100 parts by weight, a content of the second element is greater than or equal to 8 parts by weight and less than or equal to 50 parts by weight.

6. The material of any one of the preceding claims, wherein

   a weight ratio of the amorphous carbon to the first element is in the range of 5:1 to 7:1; and/or
   a weight ratio of the amorphous carbon to the second element is in the range of 1.5:1 to 15:1; and/or
   a weight ratio of the first element to the second element is in the range of 1:4 to 3:1.

7. The material of any one of the preceding claims, wherein an average particle size (D50) of the second element is in the range of 20 nm to 1000 nm, preferably 50 nm to 100 nm, measured by laser diffraction.

8. An all-solid-state rechargeable battery (1, 1a), comprising

   a positive electrode layer (10),
   a negative electrode layer (20), and
   a solid electrolyte layer (30),
   wherein the negative electrode layer (20) includes a negative electrode active material layer (22) including the material for a negative electrode active material layer of any one of the preceding claims.

9. The all-solid-state rechargeable battery of claim 8, wherein a comparison of an initial charge capacity of the positive electrode layer (10) and an initial charge capacity of the negative electrode layer (20) satisfies the requirements of Formula (1):

$$[Formula (1)]$$

$$0.01 < b/a < 0.5$$

wherein, in Formula (1), a is the initial charge capacity (mAh) of the positive active material layer (12) and b is the initial charge capacity (mAh) of the negative electrode layer (20).

10. A charging method for an all-solid-state rechargeable battery (1, 1a), **characterized in that** the first time charging the all-solid-state rechargeable battery (1, 1a) of claim 9 is performed beyond the charge capacity of the negative electrode layer (20).

11. The charging method of claim 10, wherein charging is performed in a range of 2 times and 100 times of the initial charge capacity of the negative electrode layer (20).


**Patentansprüche**

1. Material für eine aktive Materialschicht (22) einer negativen Elektrode, umfassend:

   amorphen Kohlenstoff,
   mindestens ein erstes Element, das durch eine elektrochemische Reaktion eine Legierung oder Verbindung mit Lithium ausbildet,
   wobei das erste Element mindestens eines, ausgewählt aus Silber, Platin, Gold und Palladium, ist, und
   mindestens ein zweites Element, das nicht durch eine elektrochemische Reaktion eine Legierung oder Verbindung mit Lithium ausbildet,
   wobei das zweite Element ein Element aus Gruppe 3 bis 11 der vierten Periode des Periodensystems ist,
   wobei die aktive Materialschicht (22) einer negativen Elektrode Folgendes umfasst:

   50 bis 90 Gewichtsanteile des amorphen Kohlenstoffs,
   5 bis 20 Gewichtsanteile des ersten Elements und
   5 bis 40 Gewichtsanteile des zweiten Elements.

2. Material nach Anspruch 1, wobei das zweite Element mindestens eines, ausgewählt aus Eisen, Kupfer, Titan und Nickel, ist.

3. Material nach Anspruch 1 oder 2, wobei der amorphe Kohlenstoff Kohlenstoffruß ist.

4. Material nach Anspruch 1, wobei das erste Element Silber ist.

5. Material nach einem der vorangehenden Ansprüche, wobei, in der aktiven Materialschicht (22) einer negativen Elektrode, wenn ein Gehalt des amorphen Kohlenstoffs 100 Gewichtsanteile beträgt, ein Gehalt des zweiten Elements größer oder gleich 8 Gewichtsanteile und weniger oder gleich 50 Gewichtsanteile beträgt.

6. Material nach einem der vorangehenden Ansprüche, wobei ein Gewichtsverhältnis des amorphen Kohlenstoffs zu dem ersten Element in dem Bereich von 5:1 bis 7:1 liegt und/oder

ein Gewichtsverhältnis des amorphen Kohlenstoffs zu dem zweiten Element in dem Bereich von 1,5:1 bis 15:1 liegt und/oder
ein Gewichtsverhältnis des ersten Elements zu dem zweiten Element in dem Bereich von 1:4 bis 3:1 liegt.

7. Material nach einem der vorangehenden Ansprüche, wobei eine durchschnittliche Partikelgröße (D50) des zweiten Elements in dem Bereich von 20 nm bis 1000 nm, vorzugsweise 50 nm bis 100 nm, gemessen durch Laserbeugung, liegt.

8. Wiederaufladbare Feststoffbatterie (1, 1a), umfassend:

eine positive Elektrodenschicht (10),
eine negative Elektrodenschicht (20) und
eine feste Elektrolytschicht (30),
wobei die negative Elektrodenschicht (20) eine aktive Materialschicht (22) einer negativen Elektrode umfasst, die das Material für eine aktive Materialschicht einer negativen Elektrode nach einem der vorangehenden Ansprüche umfasst.

9. Wiederaufladbare Feststoffbatterie nach Anspruch 8, wobei ein Vergleich einer Anfangsladekapazität der positiven Elektrodenschicht (10) mit einer Anfangsladekapazität der negativen Elektrodenschicht (20) den Anforderungen von Formel (1) genügt:

$$[\text{Formel (1)}]$$

$$0,01 < b/a < 0,5$$

wobei, in Formel (1), a die Anfangsladekapazität (mAh) der positiven aktiven Materialschicht (12) ist und b die Anfangsladekapazität (mAh) der negativen Elektrodenschicht (20) ist.

10. Ladeverfahren für eine wiederaufladbare Feststoffbatterie (1, 1a), **dadurch gekennzeichnet, dass** der erste Ladevorgang der wiederaufladbaren Feststoffbatterie (1, 1a) nach Anspruch 9 über die Ladekapazität der negativen Elektrodenschicht (20) hinaus erfolgt.

11. Ladeverfahren nach Anspruch 10, wobei das Laden in einem Bereich von dem 2-fachen bis 100-fachen der Anfangsladekapazität der negativen Elektrodenschicht (20) erfolgt.

**Revendications**

1. Matériau pour couche de matériau actif d'électrode négative (22), comprenant

du carbone amorphe,
au moins un premier élément qui forme un alliage ou un composé avec le lithium par une réaction électrochimique,
dans lequel le premier élément est au moins un élément choisi parmi l'argent, le platine, l'or et le palladium, et
au moins un deuxième élément qui ne forme pas d'alliage ou de composé avec le lithium par une réaction électrochimique,
dans lequel le deuxième élément est un élément appartenant aux groupes 3 à 11 de la quatrième période du tableau périodique d'éléments,
dans lequel la couche de matériau actif d'électrode négative (22) comporte :

50 à 90 parties en poids du carbone amorphe,
5 à 20 parties en poids du premier élément, et
5 à 40 parties en poids du deuxième élément.

2. Matériau selon la revendication 1, dans lequel le deuxième élément est au moins un élément choisi parmi le fer, le cuivre, le titane et le nickel.

3. Matériau selon la revendication 1 ou 2, dans lequel le carbone amorphe est du noir de carbone.

4. Matériau selon la revendication 1, dans lequel le premier élément est l'argent.

5. Matériau selon l'une quelconque des revendications précédentes, dans lequel dans la couche de matériau actif d'électrode négative (22), lorsqu'une teneur en carbone amorphe est de 100 parties en poids, une teneur en deuxième élément est supérieure ou égale à 8 parties en poids et inférieure ou égale à 50 parties en poids.

6. Matériau selon l'une quelconque des revendications précédentes, dans lequel

le rapport pondéral du carbone amorphe par rapport au premier élément est dans la plage allant de 5:1 à 7:1 ; et/ou
un rapport pondéral du carbone amorphe par rapport au deuxième élément est dans la plage allant de 1,5:1 à 15:1 ; et/ou
un rapport pondéral du premier élément par rapport au deuxième élément est dans la plage allant de 1:4 à 3:1.

7. Matériau selon l'une quelconque des revendications précédentes, dans lequel une taille moyenne de particule (D50) du deuxième élément est dans la plage allant de 20 nm à 1000 nm, de préférence de 50 nm à 100 nm, mesurée par diffraction laser.

8. Batterie rechargeable entièrement solide (1, 1a), comprenant

une couche d'électrode positive (10),
une couche d'électrode négative (20), et
une couche d'électrolyte solide (30),
dans laquelle la couche d'électrode négative (20) comporte une couche de matériau actif d'électrode négative (22) comportant le matériau pour une couche de matériau actif d'électrode négative selon l'une quelconque des revendications précédentes.

9. Batterie rechargeable entièrement solide selon la revendication 8, dans laquelle une comparaison d'une capacité de charge initiale de la couche d'électrode positive (10) et d'une capacité de charge initiale de la couche d'électrode négative (20) satisfait aux exigences de la formule (1) :

[Formule (1)]
$$0,01 < b/a < 0,5$$

dans laquelle, dans la formule (1), a est la capacité de charge initiale (mAh) de la couche de matériau actif positif (12) et b est la capacité de charge initiale (mAh) de la couche d'électrode négative (20).

10. Procédé de charge d'une batterie rechargeable entièrement solide (1, 1a), **caractérisé en ce que** la première charge de la batterie rechargeable entièrement solide (1, 1a) selon la revendication 9 est réalisée au-delà de la capacité de charge de la couche d'électrode négative (20).

11. Procédé de charge selon la revendication 10, dans lequel la charge est réalisée dans une plage allant de 2 fois à 100 fois la capacité de charge initiale de la couche d'électrode négative (20).

FIG. 1

FIG. 2

FIG. 3

FIG. 4

FIG. 5

**EP 4 047 687 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019096610 A
- JP H10334889 A
- JP 2008198611 A
- US 2020313164 A1